# FASCICULE DE BREVET EUROPEEN

(11) **EP 0 897 160 B1**
(45) Date de publication et mention de la délivrance du brevet: **24.03.2004**
(21) Numéro de dépôt: 98402048.7
(22) Date de dépôt: 13.08.1998
(51) Int. Cl.: G06K 7/10, G06K 17/00

(54) **Installation et procédé de préparation de lots de commandes par prélevement de produits dans une zone de stockage et dispositif pour sa mise en oeuvre**
Einrichtung und Verfahren zur Bearbeitung von Auftragsposten durch Warenausgabe in einem Lagerbereich und Gerät zur Durchführung
Installation and method for processing batches of orders by distributing products in a storage area and device for applying the method

(30) Priorité: 13.08.1997 FR 9710311
(43) Date de publication de la demande: 17.02.1999
(73) Titulaire: Ziembicki dit Zembitski, Jury Georges, 78620 l'Etang-la-Ville (FR)
(72) Inventeur: Ziembicki dit Zembitski, Jury Georges, 78620 l'Etang-la-Ville (FR)
(74) Mandataire: Thibon-Littaye, Annick

(56) Documents cités:
- EP-A- 0 156 953
- US-A- 4 656 591
- US-A- 4 766 297
- US-A- 5 107 100
- US-A- 5 214 270
- US-A- 5 274 219

## Description

La présente invention concerne une installation de préparation de commandes par prélèvement de produits dans une zone de stockage, telle que celles qui servent en alimentation pour charger des colis en fonction de commandes à satisfaire et à délivrer indépendamment dans chacun des colis. Elle vise plus particulièrement une installation comprenant au moins un dispositif électronique portatif, du type à lecteur de codes à barres ou similaire, à utiliser pour la réalisation et la vérification des tirages de produits suivant les commandes.

L'invention concerne également un procédé de confection de colis dans une telle installation ainsi qu'un dispositif de lecture et traitement d'informations disponibles sous forme de marques optiques destiné notamment à une telle installation.

Dans le cadre de l'invention, le terme "codes à barres" doit être compris dans un sens large. Il englobe notamment les codes à barres linéaires classiques (code 39, code 128, code I 2/5, code EAN13, etc.), mais aussi les codes dits en deux dimensions ou matriciels (code "One", code PDF 417, code "Datamatrix", etc.) et, de façon plus générale, tous signes lisibles optiquement, y compris les caractères alphanumériques.

De même, le terme "produits" englobe indifféremment toutes sortes de marchandises, objets ou pièces diverses. Dans un but de simplification, on parlera plutôt d'article pour désigner un tel produit dans ce qui suit, sans que cela limite en quoi que ce soit la portée de l'invention.

La lecture des codes s'effectue de manière classique par balayage à l'aide d'un laser semi-conducteur ou par des techniques similaires. Des dispositifs optoélectroniques (photodiodes, dispositifs à couplage de charge ou CCD, etc.) convertissent les informations lues, qui se présentent sous la forme de variations d'intensité lumineuse, en signaux électriques qui sont stockés et/ou utilisés *in situ*, ou encore transmis à un système informatique central éloigné. En général, l'appareil de lecture comprend un organe d'affichage, par exemple à cristaux liquides, un clavier d'entrée de données et/ou d'instructions de programmation, ainsi que des circuits de traitement d'information et de stockage de données.

Les modèles récents d'appareils de lecture de codes à barres sont bâtis autour d'une architecture à micro-ordinateur ; ils peuvent être couplés à un système informatique central de diverses manières : ondes hertziennes, liaison filaire, modem, canal optique (infrarouge), etc. Ils peuvent enregistrer un nombre important de données, que ces données concernent des informations lues à partir des codes à barres ou des informations et/ou instructions pré-enregistrées diverses.

Des appareils de ce type sont notamment utilisés pour la préparation de colis en conformité avec une commande de client par chargement à partir de produits à livrer qui sont disponibles dans une installation de stockage d'articles divers. Dans le cadre de l'invention, l'expression "installation de stockage" est relative à toutes sortes d'entrepôts de distribution logistique de produits, articles, marchandises, pièces ou objets divers.

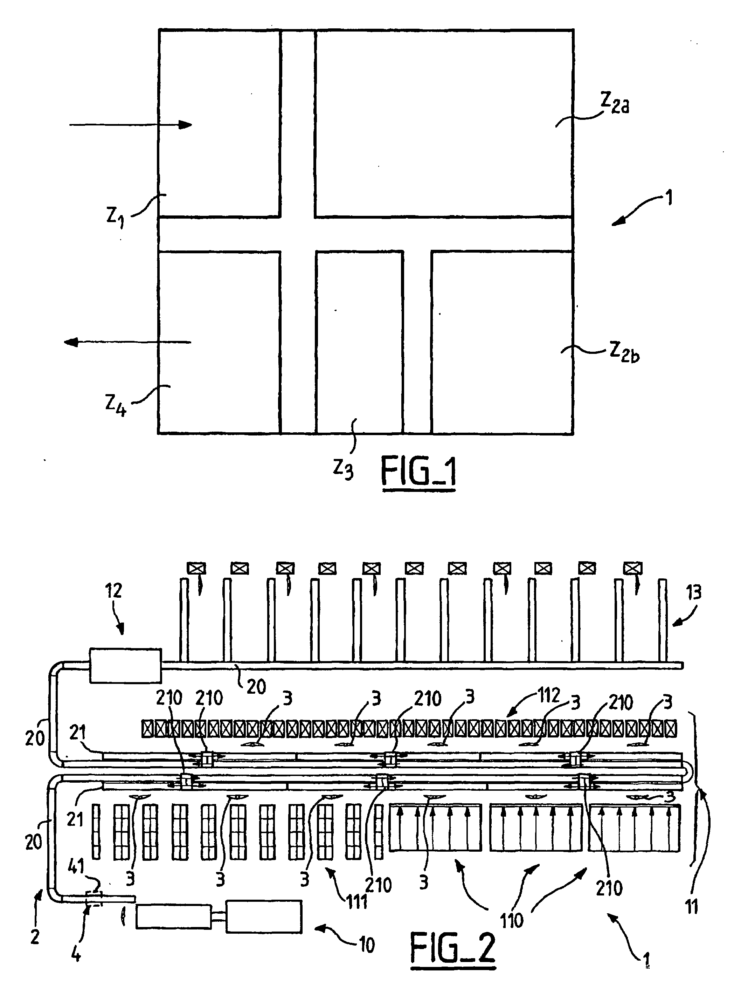

Comme illustré schématiquement sur la figure 1, annexée à la présente description, un entrepôt de distribution 1 comprend, quand il est complexe, plusieurs zones distinctes, par-exemple les zones suivantes :
- Une zone de réception Z₁ destinée au déchargement des véhicules, au contrôle des marchandises reçues, à l'identification des produits et au regroupement de ceux-ci dans des unités de stockage. Ces dernières peuvent être diverses selon la nature des produits considérés : palettes, bacs, sachets, etc.).
- Une ou plusieurs zones de stockage dit de masse, par exemple deux, Z₂ₐ et Z_{2b}, comme illustré sur la figure 1, qui sont destinées à conserver les produits dans un volume le plus faible possible. Lorsqu'il y a plusieurs zones de stockage, la répartition des produits peut être effectuée, par exemple, en tenant compte de leur conditionnement ou du mode de stockage (palettes, casiers, rayonnages, etc.).
- Une zone de préparation des commandes et d'emballage Z₃, qui intéresse plus particulièrement l'invention. Dans cette zone on effectue ce qui est appelé en termes de métier le "tirage" (ou "picking" en anglais), vers un colis qui peut être un contenant intermédiaire ou directement un carton ou une caisse à expédier en livraison. Eventuellement, on y opère un tri des articles initialement prélevés. On effectue également, dans cette zone Z₃, le contrôle des articles prélevés, la fermeture et l'étiquetage des colis préparés.
- Et une zone de tri et de regroupement de colis Z₄, dans laquelle on effectue un tri et un regroupement des colis préparés en fonction de divers paramètres : adresses des destinataires, adresses des transporteurs, etc. Enfin, la dernière opération dans cette zone consiste à charger les véhicules de transport avec les colis ainsi remplis.

La notion de colis doit être comprise dans son sens le plus large dans le cadre de l'invention, tout comme celle de contenant. Il peut s'agir notamment d'un simple bac dans lequel on met provisoirement les articles répondant à un lot d'articles commandés par le client, ou d'un carton que l'on ferme une fois rempli par un tel lot, ou encore d'un carton mis dans un bac.

En ce qui concerne plus particulièrement la zone de préparation des commandes Z₃, il est à noter que celle-ci peut être englobée avec la ou les zones de stockage Z₂ₐ et Z_{2b}, dites aussi zones de tirage, le tirage s'effectuant à partir de casiers ou autres contenants de stockage avec des engins permettant aux opérateurs de prélever des articles, pièces ou autres produits en hauteur. Elle peut aussi, tout en étant englobée dans les mêmes zones Z₂ₐ et Z_{2b}, se situer aux seuls niveaux inférieurs, ce qui permet un accès plus aisé aux articles à prélever. Elle peut encore être séparée du stock dans une zone de préparation spécifique Z₄, comme illustré par la figure 1.

Par ailleurs, l'art connu prévoit de multiples procédés de préparation des commandes. A titre d'exemples non exhaustifs, on peut citer les procédés suivants, qui sont les plus répandus :
- tournée de tirage effectuée avec une liste à cocher à chaque fois qu'un produit a été prélevé et mis dans le contenant de préparation d'un lot commandé ;
- tournée de tirage effectuée avec des étiquettes et impliquant le collage de l'étiquette sur le produit prélevé correspondant ;
- tournée de tirage effectuée directement dans le carton d'expédition du lot, avec plusieurs listes à cocher dans le cas de plusieurs colis par tournée, l'une des listes donnant l'ordre des emplacements de articles tandis que les autres indiquent les articles par colis.

Ces procédés et systèmes présentent notamment l'inconvénient de nécessiter de nombreuses opérations manuelles.

On a certes essayé de mécaniser et automatiser les opérations de tirage. Ces essais n'ont pu aboutir que dans certains secteurs très spécifiques de l'économie. On peut mentionner ici les distributeurs automatisés pour la répartition de produits pharmaceutiques.

Des mécanisations restant encore partielles ont également vu le jour : systèmes de préparation sur convoyeurs avec tri automatique des pièces ou systèmes de préparation à dérivations multiples, appelés aussi systèmes de préparation de commandes à gares (dits également à secteurs ou à stations).

Dans ces systèmes, le colis (carton, bac ou autre contenant, éventuellement intermédiaire) est véhiculé dans la zone de tirage, zone dans laquelle des produits portant des références prédéterminées sont à prélever pour le remplir. A titre d'exemple, on considère un système comportant une série de secteurs, numérotés 1, 2, 3... On suppose que la commande comprend plusieurs articles, mais que ces articles relèvent de deux références distinctes seulement, arbitrairement dénommées A et B. On suppose également que les articles portant la référence A sont situés dans le secteur N° 2, et les articles de référence "B" dans le secteur N° 3.

Dans ces conditions, un colis à préparer, formé en amont du système, est transporté par un convoyeur motorisé et dévié par un aiguillage dans le secteur N° 2 sans passer par le secteur N° 1. Cette déviation est rendue possible par une étiquette d'identification (ou un organe similaire) placée sur le colis au moment du lancement. Cette étiquette est lue automatiquement à l'entrée de chaque secteur et un aiguillage associé à ce secteur ne s'actionne que si un produit stocké dans ce secteur doit être chargé dans le colis constituant le contenant récepteur.

Généralement, l'étiquette est munie de codes à barres, mais d'autres moyens équivalents de codification des contenants existent (par exemple réflecteur en nid d'abeille, transpondeur, étiquette électronique, etc.).

Une fois les articles disponibles dans le secteur N° 2 placés dans le contenant récepteur de la commande en cours de préparation, l'opérateur repousse ce contenant sur le convoyeur de transport, de façon qu'il soit dirigé vers le secteur N° 3 et y pénètre, puis les articles de référence B y sont placés. Ce chargement effectué, le contenant est repoussé sur le convoyeur pour être transporté jusqu'à la fin de la chaîne, sans s'arrêter dans les autres secteurs puisque ceux-ci contiennent des articles dont les références sont autres que A ou B.

Bien que l'automatisation des opérations soit obtenue, au moins partiellement, le système à aiguillages multiples présente cependant divers inconvénients, en raison de son mode de fonctionnement intrinsèque. En effet, le passage des contenants, tant en sortie du convoyeur principal vers les secteurs en dérivation qu'en sortie des secteurs vers le convoyeur principal, est nécessairement aléatoire, puisque le lot exact à recevoir dans chaque contenant dépend de la commande d'un client donné. Or en général, les articles concernant une commande particulière ne sont pas également répartis dans les différents secteurs de stockage. Il en résulte, soit des attentes improductives des opérateurs dans un ou plusieurs secteurs, soit des files d'attente des contenants à alimenter qui peuvent dépasser la capacité de traitement d'un ou plusieurs secteurs, ce qui, dans le pire des cas, peut provoquer un blocage complet de l'installation.

En outre, la préparation des commandes fait usage soit d'une liste à cocher qui est associée au contenant et qui est sortie par l'opérateur à chaque sortie d'un contenant dans un secteur déterminé, soit d'afficheurs (par exemple des écrans luminescents) qui sont placés sur les emplacements de tirage de la zone de préparation et qui doivent être acquittés.

Dans les deux cas, l'art antérieur à l'invention est loin d'être exempt d'inconvénients. La liste à cocher impose une prise et une dépose de celle-ci dans le contenant ou colis de préparation des lots. Les afficheurs interdisent la présence de plusieurs opérateurs dans un même secteur. Enfin, ces procédés n'évitent pas les erreurs et, de ce fait, ils ne garantissent pas une grande fiabilité.

L'invention se fixe donc pour but d'éviter les inconvénients de l'art connu, et dont certains viennent d'être rappelés. Elle vise notamment à assurer tout à la fois une plus grande automatisation et une fiabilité accrue, proche du "zéro défaut". Elle permet aussi, pour les systèmes du type à dérivations multiples, la présence de plusieurs opérateurs dans un même secteur, ce qui autorise un désengorgement des secteurs trop chargés et évite tout risque de blocage total du système. De façon plus générale, elle conduit à un accroissement de la productivité, du fait des avantages qui viennent d'être rappelés, mais aussi du fait d'un temps de traitement nécessaire à l'opérateur qui est généralement plus faible que celui que demande l'emploi d'une liste à cocher ou d'afficheurs qu'il est nécessaire d'acquitter manuellement.

Elle consiste essentiellement à doter un dispositif de lecture et traitement d'informations disponibles sous forme de marques codées lisibles optiquement, telles que des codes barres à recueillir par un organe lecteur de lecture optique par balayage sur chaque contenant d'une installation de préparation de lots de commande et sur des articles à utiliser en contenu de remplissage dudit contenant, de moyens permettant de le rendre alternativement opératif en lecture de deux séries différentes de marques optiques, relevant respectivement d'informations de contenant et d'informations de contenu, ainsi que de moyens de commutation pour passer automatiquement d'un premier mode de lecture dans lequel il est opératif en lecture et décodage desdites informations de contenant sous la forme d'un appareil portatif manoeuvrable par un opérateur, notamment pour leur traitement en élaboration d'informations à afficher sur écran devant ledit opérateur, à un second mode de lecture dans lequel il est opératif en lecture et décodage desdites infomations de contenu, notamment pour traitement par comparaison avec des informations affichées sur écran devant ledit opérateur. De préférence, un tel dispositif suivant l'invention comporte en outre des moyens de commande automatique desdits moyens de commutation en fonction de la présence ou non dudit apparail sur un support de fixation dans un état temporaire où il n'est pas portatif.

L'invention prévoit donc notamment un dispositif de lecture et traitement de marques optiques à au moins deux modes de lecture, respectivement réservés à deux natures de marques à lire différentes. Suivant que l'appareil de lecture et décodage est utilisé de manière classique en pistolet portatif pour balayer des marques restant relativement fixes ou qu'il est utilisé en mains libres quand l'appareil portatif est posé sur son support, par exemple sur un contenant à remplir dans une installation de préparation de lots de commandes, il passe automatiquement d'une phase de traitement d'informations de première nature réservée aux informations de contenant quand l'opérateur manie l'appareil pour lire des marques telles que des codes à barres identifiant un contenant et des caractéristiques qui lui sont associées dans une telle installation, à une phase de traitement d'informations de seconde nature, réservée aux informations de contenu, telles que celles dont l'opérateur peut assurer la lecture quand il introduit un article dans le contenant en faisant passer des marques codées qu'il porte devant l'organe de balayage optique de l'appareil après avoir mis ce dernier dans son état temporaire fixe sur son support.

On remarquera que le changement simultané de mode de lecture ( pistolet / mains libres ) et de nature de lecture ( contenant / contenu ) est tout naturel pour l'opérateur, quand la commutation est assurée automatiquement au moment où le support reçoit l'appareil, car dans la deuxième phase de fonctionnement, il sera libéré de la gêne et de la fatigue qu'engendrerait le fait d'avoir à déplacer à la fois l'appareil de lecture et les articles devant être prélevées pour remplir le contenant. De plus, il est avantageux de munir l'appareil de lecture portatif de moyens coopérants pour un support associé constitué directement par ou sur le contenant (tel un carton de livraison d'un lot de commandes), car on peut alors se dispenser des autres formes classiques de marquage par lesquelles l'opérateur signale quel contenant est en cours de remplissage.

Cette forme de réalisation de l'invention à deux modes de lecture respectivement réservés à deux natures de marques codées par commutation commandée à partir du support temporaire n'est pas limitative. En particulier, on peut prévoir des moyens de commande manuelle de commutation, par exemple par pression sur un bouton spécifique ou sur des touches d'un clavier équipant l'appareil de lecture.

Suivant un mode de réalisation préféré de l'invention, ce genre de dispositions permet une commutation supplémentaire pour utiliser l'appareil de lecture alternativement en lecture d'informations de contenant (dont le traitement détermine notamment l'affichage des types et quantités d'articles devant être introduits dans ce contenant), en lecture d'informations de contenu par passage des articles transportés devant le lecteur mis en position fixe sur son support (dont le traitement détermine notamment un contrôle des références de chaque article prélevé pour chargement dans le contenant et incrémente ou décrémente un compteur ou organe similaire), et en définition et/ou lecture d'informations relatives à des zones de stockage ou emplacements dans lesquels les différents articles destinés au contenant doivent être prélevés. La présence d'un clavier permet aussi à l'opérateur de saisir des données et/ou des instructions, par exemple une indication de quantité pour des articles appartenant à une même catégorie ou situés dans un emplacement de stockage déterminé.

Suivant d'autres caractéristiques du dispositif de lecture et traitement d'informations sous forme de marques optiques suivant l'invention, l'appareil lecteur portatif est avantageusement équipé d'un écran d'affichage qui est commandé pour l'affichage d'informations résultant d'un traitement faisant au moins intervenir les informations de contenant et qui est séparable de l'organe de lecture par balayage quand le lecteur est opératif en lecture de marques optiques relevant des informations de contenu. En pratique, cet écran peut aussi être dédoublé. Autrement dit, on équipe dans ce cas l'apparail lecteur de moyens de visualisation d'informations décodées en rajoutant un écran amovible à un appareil lecteur classique comportant déjà un écran d'affichage fixe, ainsi que des circuits électroniques assurant la duplication sur l'écran amovible des informations apparaissant sur l'écran fixe. Ces dernières résultent, par exemple, du traitement des informations de contenant précédemment recueillies et/ou d'un traitement de comparaison faisant intervenir les informations acquises par lecture des marques codées propres aux articles amenés par l'opérateur pour remplir ledit contenant.

Dans un mode de réalisation supplémentaire de l'invention, l'écran ou organe d'affichage dont est avantageusement muni le lecteur optique est détachable du corps de ce dernier, et il comporte des moyens de fixation permettant, par exemple, de le transporter au poignet de l'opérateur. Il comprend alors avantageusement des moyens de communication avec le corps du dispositif, mettant en oeuvre, par exemple, une transmission radioélectrique. Quand notamment les moyens de visualisation comportent deux écrans d'affichage, ceci permet à l'opérateur de lire les informations soit directement sur l'écran propre du lecteur (écran dit fixe) soit sur le second écran (écran amovible qu'il porte sur lui et sur lequel les informations apparaissant sur le premier écran à la suite de la lecture des informations de contenant sont dupliquées).

L'invention a pour objet une installation tel que défini à la revendication 1. Les revendications 1 et 13 ont été délimitées par rapport à US-A-5 274 219.

L'invention a également pour objet un procédé de confection de colis qui se caractérise par des étapes successives mettant en oeuvre les différents moyens que comporte une installation telle que définie ci-dessus.

L'invention sera mieux comprise et d'autres caractéristiques et avantages apparaîtront à la lecture de la description qui suit, faite en référence aux figures annexées, parmi lesquelles :
- la figure 1 illustre schématiquement un exemple d'implantation des fonctions logistiques dans une installation constituant entrepôt de stockage de produits selon l'art connu ;
- la figure 2 illustre schématiquement un système de préparation de commandes suivant l'invention dans une installation du type dit à secteurs ou gares ;
- les figures 3a et 3b illustrent un exemple de dispositif de lecture utilisable dans une installation conforme à l'invention selon un premier mode de réalisation, respectivement en vue de côté et en vue de dessus ;
- la figure 4 illustre de façon plus détaillée le fonctionnement de ce dispositif de lecture, quand il est utilisé en mode de lecture à mains libres, dans le cas d'un premier mode d'accrochage du dispositif ;
- la figure 5 illustre une variante de réalisation du dispositif de lecture conforme à l'invention convenant à un second mode d'accrochage, également quand il est utilisé en mode de lecture à mains libres ;
- les figures 6a à 6c illustrent de façon plus détaillée des exemples de secteurs de stockage faisant partie d'un entrepôt, selon trois structures différentes ;
- et la figure 7 illustre un exemple d'architecture de système informatique exploitant des liaisons interactives avec plusieurs dispositifs de lecture selon l'invention.

Dans un premier temps, et pour fixer les idées, on va décrire l'invention dans le cadre d'un système de préparation de commandes à secteurs ou gares. Un exemple d'un entrepôt 1 comprenant un tel système est illustré schématiquement par la figure 2.

Des contenants (bacs, cartons, ou cartons dans des bacs), destinés à recevoir les articles des commandes constituant les lots dans les différents colis, sont formés et lancés dans une première zone 10, en amont de l'installation. A ce stade, les contenants sont vides. Ils sont constitués par exemple de cartons ou emballages similaires, ou de contenants intermédiaires. Ils sont placés directement sur un convoyeur 2, l'ensemble portant globalement la référence 4. Le convoyeur comporte un chemin principal de transport, ou convoyeur principal 20, qui serpente dans toutes les zones de l'entrepôt 1.

C'est dans la zone de formage et de lancement 10 que l'on place sur les contenants des étiquettes 41 qui sont munies de codes à barres. Les informations associées à ces codes à barres identifient le contenant 4 à remplir et les articles à y placer (références, numéro de secteur, éventuellement emplacement de stockage à l'intérieur d'un secteur déterminé, quantité, etc.).

Les zones de préparation des commandes sont représentées globalement sous la référence 11. De façon plus précise, dans l'exemple décrit sur la figure 2, il existe trois types de secteurs desservis par le convoyeur 2 : des secteurs de stockage de produits en casiers 111, des secteurs à tirage dynamique 110 dorsal (stockage dans le dos des opérateurs 3) et des secteurs sur palettes 112. Des exemples de réalisation de ces secteurs seront détaillés ultérieurement. Avantageusement, l'installation comporte aussi des secteurs de tirage dynamique frontal (non représentés), où les articles à prélever sont rangés dans des zones de stockage se situant devant les opérateurs, au-dessus du convoyeur.

De façon connue en soi, le chemin principal 20 du convoyeur 2 comporte un certain nombre de stations d'aiguillage 210, que l'on a représentées desservant chacune deux secteurs symétriques parmi les secteurs précédemment définis. Eventuellement, elles desservent une partie seulement d'un ou deux secteurs de ce type. En effet, il est à noter que chaque secteur peut être desservi par plusieurs aiguillages assurant un convoyage dérivé par rapport au chemin principal.

De façon connue également, ces stations d'aiguillage 210 sont munies de lecteurs fixes (non représentés sur la figure 2) permettant de décoder tout ou partie des informations portées par les codes à barres des étiquettes précitées, notamment les numéros de secteurs ou de sous-secteurs, si plusieurs stations d'aiguillage 210 sont associées à un même secteur. Dans l'exemple illustré sur la figure 2, trois stations d'aiguillage 210 desservent six secteurs à palettes 112.

Quand une des stations d'aiguillage 210 lit sur un contenant 4 transporté par le chemin principal 20 du convoyeur 2 une adresse codée qui lui est associée (numéro de secteur ou de sous-secteur), un organe déflecteur (non représenté, car connu en lui-même dans sa réalisation mécanique) est actionné, et le contenant est dévié vers un chemin auxiliaire 21 du convoyeur 2, relié en parallèle au chemin principal 20. Ce chemin auxiliaire 21 est avantageusement constitué de rouleaux à rotation libre, de sorte que le contenant 4 dévié peut être mis en mouvement de translation, indifféremment dans le sens de la marche du convoyeur 2 ou en sens inverse. Il est alors réceptionné par un opérateur 3.

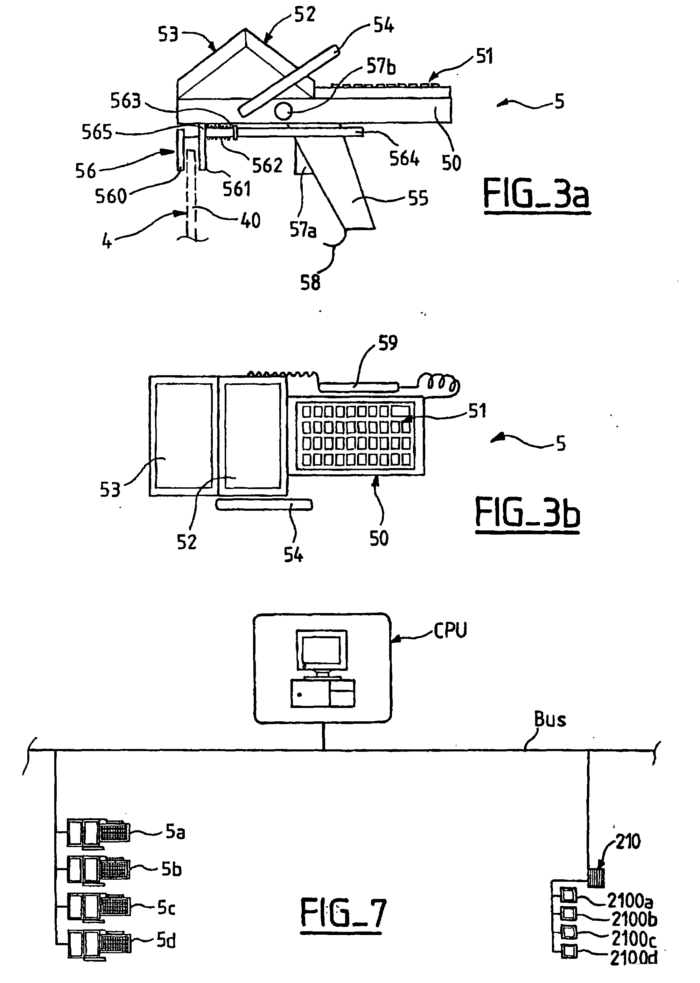

Suivant l'une des caractéristiques de l'invention, les opérateurs 3 sont munis d'un dispositif lecteur de codes à barres spécifique. Les figures 3a et 3b illustrent un exemple de réalisation d'un lecteur de codes à barres 5, respectivement en vue de côté et en vue de dessus.

De façon en elle-même par ailleurs classique, le lecteur 5 comporte un corps principal sous la forme d'un boîtier 50 enfermant des circuits électroniques et/ou de traitement de l'information à programme enregistré. Il comprend d'autre part un organe de balayage 53, produisant un faisceau laser ou faisceau similaire qui est lu par des organes de conversion optoélectroniques (non représentés). C'est cet organe de balayage 53 qui permet de lire les codes à barres portés par l'étiquette apposée sur le contenant 4 (figure 2). Un écran 52, par exemple à cristaux liquides, permet d'afficher les données lues par l'organe de balayage 53 ou celles enregistrées au préalable dans le dispositif lecteur 5. Avantageusement, il est prévu un clavier 51 qui permet la saisie de données et/ou d'instructions qui peuvent également être affichées sur l'écran 52. Le dispositif 5 comporte habituellement un organe de préhension 55, de type crosse, permettant à un opérateur de le tenir aisément dans la main.

Un premier commutateur 57a, placé avantageusement dans la crosse 55, permet de déclencher une lecture de type classique, c'est-à-dire par pistolet. Pour ce faire, l'opérateur 3 (figure 2) approche l'organe de balayage de l'étiquette 41 portant les codes à barres et il appuie sur le commutateur 57a. Le dispositif 5 lit alors les codes à barres, et les circuits électroniques internes décodent les informations associées à ceux-ci, notamment l'identité du contenant 4, les références des articles à charger, la quantité d'articles de chaque référence, et éventuellement l'emplacement de ceux-ci dans le ou les zones de stockage accessible(s) à un opérateur 3 affecté au secteur. Ces informations, une fois décodées, sont affichées sur l'écran 52 sous forme lisible par l'opérateur.

L'opérateur 3 fixe alors provisoirement le dispositif de lecture optique 5 sur le contenant 4 en cours de remplissage. A cet effet, selon une caractéristique secondaire de l'invention, le boîtier 50 du dispositif 5 est muni d'un organe d'accrochage 56, qui constitue son support de fixation temporaire.

Conformément à un premier mode de réalisation, tel que représenté sur la figure 3a, cet organe d'accrochage 56 se présente sous la forme d'une pince comportant un axe 564, une première mâchoire 560, perpendiculaire à cet axe 564 et solidaire de celui-ci, une seconde mâchoire 561 comportant un orifice 565 dans lequel est enfilé l'axe 564, une butée 563 disposée sur l'axe 564, et un ressort 562 disposé entre la butée 563 et la seconde mâchoire 561. Lorsque l'opérateur 3 pousse sur l'axe 564, les deux mâchoires 560 et 561 s'écartent et le ressort 562 est comprimé. On peut introduire l'extrémité supérieure 40 d'un contenant 4 entre les deux mâchoires 560 et 561. Lorsque l'effort de poussée sur l'axe 564 cesse, les deux mâchoires 560 et 561 se rapprochent l'une de l'autre, sous l'effet du ressort 562 qui se détend, et elles emprisonnent la paroi 40.

Selon une autre caractéristique de l'invention, le dispositif 5 comprend un second commutateur 57b. Lorsque le dispositif 5 est fixé à la paroi 40, l'opérateur appuie sur ce commutateur 57b. Cette action déclenche un second mode de lecture, celui dit ici à mains libres. Il suffit alors à l'opérateur de passer dans le champ de vision de l'organe de balayage 53 les articles qui doivent être placés dans le contenant 4 pour vérifier le contenu du colis en cours de préparation en fonction des commandes correspondantes. Pour ce faire, l'opérateur 3 consulte l'écran 52, qui lui indique la quantité d'articles à placer dans le contenant 4, leurs références et/ou leurs emplacements dans la zone qu'il dessert.

De façon avantageuse, si plusieurs types d'articles (c'est-à-dire des articles portant des références distinctes) sont stockés dans un même secteur, les informations associées (quantité, code ou référence, emplacement) sont affichées sur des lignes distinctes de l'écran 52 pour qu'il n'y ait pas d'ambiguïté.

Dans le mode à mains libres, le dispositif lecteur 5, par l'intermédiaire de l'organe de balayage 53, lit une étiquette collée sur l'article et portant des codes lisibles optiquement, qui sont ici des codes à barres identifiant l'article. Les informations traduites dans ces codes à barres comprennent au moins sa référence. Si la référence lue correspond bien à l'une des références d'articles commandés affichées sur l'écran 52, le dispositif 5 peut émettre un signal lumineux, et/ou de préférence sonore, par exemple un bip caractéristique, indiquant à l'opérateur 3 que la manipulation qu'il vient d'exécuter est correcte. Simultanément, la quantité affichée sur la ligne correspondante est décrémentée d'une unité.

Avantageusement, lorsque tous les articles correspondant à une référence donnée ont été placés dans le contenant 4, la ligne associée à cet article est effacée de l'écran 52. L'opérateur 3 sait alors qu'il a terminé le chargement des articles portant cette référence.

Toutes ces opérations s'effectuent sous la commande de circuits électroniques de traitement de données, par exemple à base d'un microprocesseur, qui sont classiques en eux-mêmes.

Dans le cas contraire, si l'article qui vient d'être placé dans le contenant 4 ne correspond pas à au moins l'une des références d'articles à charger, ou si ce produit est surnuméraire, un signal lumineux ou sonore, distinct du premier, est également émis. L'opérateur 3 sait alors qu'il a commis une erreur et qu'il doit retirer l'article qu'il vient de placer dans le contenant 4. L'opération n'est pas comptabilisée, en ce sens qu'il n'y a pas de décrémentation d'une unité de la référence d'article affichée.

Dans une variante de la mise en oeuvre de l'invention, lorsque les articles sont en grande quantité, l'opérateur peut se voir donner le choix entre un passage multiple des articles devant l'organe de balayage 53, selon la procédure qui vient d'être décrite, ou la saisie, à l'aide du clavier 51, d'un nombre représentant la quantité d'articles de même référence à placer dans le contenant 4.

Dans une variante préférée du premier mode de réalisation de l'invention qui vient d'être décrit, le fait de fixer le dispositif 5 sur la paroi 40 a pour effet de déclencher automatiquement le second mode de lecture, c'est-à-dire le mode dit à mains libres. Pour ce faire, il suffit que l'organe d'accrochage 56 du support de fixation temporaire soit couplé au second commutateur 57b, par exemple à l'aide d'un doigt articulé (non représenté). Dans ce cas, on prévoit notamment que le fait de pousser sur l'axe 564 déclenche automatiquement le passage au second mode de lecture. Dans ce mode de réalisation, le commutateur 57b peut d'ailleurs être omis, ou, plus précisément, ne pas être accessible de l'extérieur du boîtier. Egalement dans ce mode de réalisation, le commutateur 57b peut être utilisé pour déclencher un troisième mode de lecture (en numéro de lot d'un produit ou en référence d'emplacement ou de zone).

De façon avantageuse également, un crochet 58, ou un organe similaire, peut être rendu solidaire du bas de la crosse 55 ou de tout autre endroit approprié du boîtier 50. Cet organe 58 permet d'accrocher le dispositif 5 à la ceinture de l'opérateur 3 ou à une autre pièce de vêtement. Cette disposition est particulièrement intéressante lorsque l'opérateur 3 doit effectuer des déplacements importants dans son secteur. C'est par exemple le cas pour les secteurs comportant des casiers ou rayonnages de stockage à tirage statique.

De façon optionnelle, le dispositif 5 peut comporter un crayon auxiliaire de lecture optique de codes à barres 59, en supplément de l'organe de balayage principal 53.

Enfin, le dispositif 5 peut fonctionner de façon autonome ou, dans un mode de réalisation préféré, être relié à un système informatique central. Les progrès de la technique ont permis d'augmenter de façon importante la puissance de calcul des circuits de traitement de l'information, tout en réduisant le volume occupé par ces circuits et en les dotant d'une capacité de mémoire vive également très importante. Il est ainsi possible d'intégrer, comme il a été indiqué, l'équivalent d'un micro-ordinateur dans le boîtier du dispositif 5. Une grande partie du traitement de l'information peut donc être réalisé au sein même du dispositif de lecture optique. De même, la majorité des données nécessaires à ce traitement de l'information peuvent être pré-enregistrées.

Cependant, il peut être très intéressant de suivre les différentes opérations de préparation des colis en temps réel. Pour ce faire, les dispositifs 5 sont reliés à un système informatique central par toute technique appropriée : liaison filaire, modem, liaison hertzienne, liaison par boucle magnétique ou par voie optique (infrarouge). Dans l'exemple illustré par les figures 3a et 3b, on a prévu une antenne 54, constituée d'un brin unique. Les liaisons peuvent être unidirectionnelles ou, préférentiellement, bidirectionnelles.

Dans un premier sens de transmission, les données lues par le dispositif 5, soit en mode par pistolet (premier mode de lecture), soit en mode à mains libres (second mode de lecture), peuvent servir à différentes fins, telles que la localisation des lots d'articles en cours de confection, l'état d'avancement des commandes, l'état des stocks, etc.

Dans le second sens de transmission, les dispositifs 5 peuvent recevoir des données et/ou des instructions pour charger leur mémoire. A titre d'exemple, il peut s'agir de tables élaborant la correspondance entre les codes lus sur les étiquettes apposées sur les contenants 4 et leur libellés complets, tels qu'ils sont affichés sur l'écran 52.

En utilisant une communication bidirectionnelle, il est aussi possible d'interdire à un autre opérateur 3 de remplir un contenant 4 avec des produits déjà présents dans celui-ci, ce en quantité suffisante pour chaque référence d'articles. Les données d'identité de contenant étant dans ce cas transmises à l'ordinateur central, si ce nouvel opérateur 3 essaie de remplir de nouveau le contenant 4, un message d'erreur est transmis au dispositif 5 dont il est muni. Ce dernier émet un signal d'erreur, lumineux ou sonore. Il n'est alors pas nécessaire de marquer manuellement le contenant 4, ce qui évite pratiquement tout risque de manipulation erronée.

De façon accessoire, les liaisons peuvent aussi permettre l'échange de messages, dans un sens ou un autre, entre les opérateurs 3 et un poste central, par exemple pour signaler des situations anormales ou des problèmes divers (rupture de stock, avaries au tirage de certains articles, etc.). En particulier, un opérateur 3 peut faire un usage combiné de la fonction lecteur pour acquérir des codes à barres et du clavier pour y associer un commentaire et transmettre ces informations à un poste central ou au système informatique global.

Lorsque tous les produits stockés à prélever dans un secteur donné ont été placés dans le contenant 4, l'opérateur décroche le dispositif 5. Cette manipulation occasionne une commutation automatique en mode de lecture par pistolet si, comme c'est le cas dans le mode de réalisation préféré, l'organe d'accrochage est couplé au second commutateur 57b ou à un commutateur interne au boîtier en faisant fonction. Dans le cas contraire, il peut être nécessaire d'appuyer sur le second commutateur 57b. Dans une autre variante, cette commutation peut être obtenue automatiquement par les circuits électroniques du boîtier ou par logiciel, et commandée uniquement lorsque tous les articles commandés à prélever dans le secteur ont été correctement placés dans le contenant 4 en satisfaction de la commande du client correspondant.

Lorsque tous les produits stockés dans un secteur donné ont ainsi été tirés en remplissage du contenant 4, celui-ci est poussé sur le chemin principal 20 du convoyeur motorisé 2, qui l'entraîne vers un autre secteur. Les opérations précédemment décrites se déroulent de façon identique pour les secteurs concernés jusqu'à ce que le contenant 4 atteigne une station de fermeture des colis 12 et un système de tri des colis 13. Les opérations effectuées dans ces zones étant tout-à-fait classiques, il est inutile de les décrire plus avant.

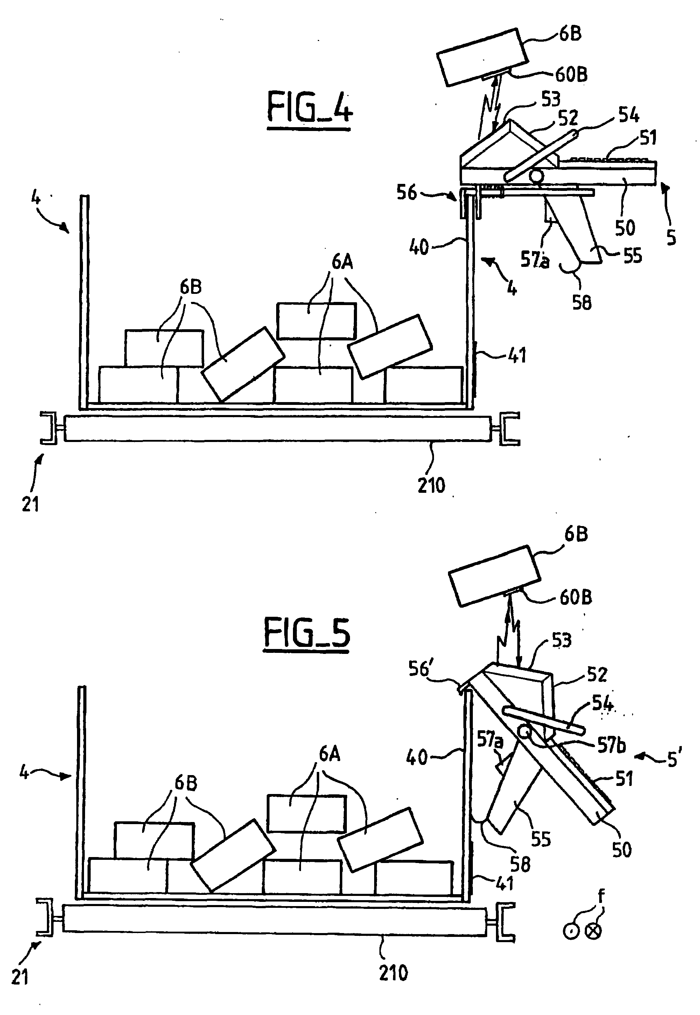

La figure 4 illustre de façon plus détaillée le remplissage du contenant 4 pendant la phase de lecture en mode à mains libres. Le dispositif 5 est alors fixé temporairement à la paroi 40 du contenant 4. Ce dernier peut se déplacer dans un sens ou l'autre sur les rouleaux 210 du chemin auxiliaire 21 du convoyeur 2 (figure 2). Le contenant 4 porte une étiquette d'identification 41 à codes à barres qui est décodée pendant la phase de lecture par pistolet (premier mode de lecture). Le passage d'un article, ici référencé 6B, devant la fenêtre de lecture de l'organe de balayage 53 est détecté par le dispositif 5, ce qui déclenche les diverses étapes qui viennent d'être décrites (décrémentation, transmission éventuelle d'informations au système central informatique, etc.).

En effet, cet article 6B comporte une étiquette à codes à barres 60B qui est lue par l'organe à balayage 56. En réalité, ces codes à barres sont le plus souvent imprimés directement sur une face de l'article 6B. Dans l'exemple illustré sur la figure 4, le contenant 4 contient déjà quatre articles d'une autre référence 6A et trois articles de la référence courante 6B en cours de chargement.

La figure 5 illustre un second mode de réalisation du dispositif à double lecture, ici référencé 5'. Celui-ci est identique au dispositif 5 des figures 3a, 3b et 4, à l'exception de l'organe d'accrochage temporaire à la paroi 40. Cet organe, référencé 56', est constitué d'une simple patte formant crochet. Le dispositif 5' peut être posé contre la paroi 40 ; il est alors retenu à l'extrémité supérieure de celle-ci par la patte formant crochet 56' et s'appuyant contre la paroi 40 par l'extrémité inférieure de la crosse 55, ou par le crochet de transport 58 s'il existe. Comme précédemment, le dispositif 5 comporte deux commutateurs 57a et 57b, respectivement assignés au déclenchement de l'un des deux modes de lecture (pistolet ou mains libres).

Comme précédemment, dans une variante de réalisation préférée, l'organe d'accrochage temporaire 56' peut agir sur le commutateur 57b ou un commutateur interne en faisant fonction, de manière à provoquer le passage automatique d'un mode de lecture à l'autre.

Quel que soit le mode de réalisation de l'organe de fixation temporaire (figure 3a : 56 ou figure 5 : 56'), le dispositif de lecture optique, 5 ou 5', peut être accroché à une paroi du contenant 4 lui-même, comme il a été supposé jusqu'à présent, ou à un support fixe, adjacent au contenant, ou pour le moins proche de celui-ci. Il est en effet nécessaire que les articles introduits dans le contenant 4 passent dans le champ de lecture de leurs codes à barres par l'organe de balayage pour fournir par décodage les informations de contenu.

De même, quel que soit le mode de réalisation du dispositif de lecture optique, 5 ou 5', l'alimentation en énergie électrique se fera, de préférence, à l'aide de batteries rechargeables. Dans l'état actuel des techniques, l'autonomie des batteries utilisées pour de tels dispositifs est limitée typiquement à une ou deux heures.

Aussi, il est important d'adopter des mesures permettant de disposer d'une autonomie de fonctionnement substantiellement augmentée.

Selon une première variante de réalisation, on munit le dispositif de lecture optique, 5 ou 5', d'une ou plusieurs cellules photo-électriques (non représentées) qui détectent le passage d'un article dans le champ de lecture et mettent en fonctionnement les organes de balayage seulement lorsque cette détection est effective. Le reste du temps, seuls les circuits d'alimentation en énergie électrique des cellules photo-électriques, des circuits de détection associés, et des circuits de commande de l'alimentation électrique des autres circuits sont activés. L'énergie électrique nécessaire est très faible. Le dispositif de lecture optique est donc à l'état de veille pendant la majorité du temps de fonctionnement. Les économies d'énergie réalisées sont substantielles, et l'autonomie de fonctionnement est donc beaucoup plus importante.

Selon une deuxième variante de réalisation, qui peut être combinée à la première, chaque opérateur 3 dispose d'au moins deux dispositifs de lecture. A chaque instant, un dispositif est opérationnel, et le deuxième (ou les autres) est (ou sont) en charge rapide sur un socle de recharge, de type classique en soi. Cette variante de réalisation est particulièrement intéressante s'il existe des liaisons en temps réel avec un système informatique central. En effet, même si la tension d'alimentation nécessaire au bon fonctionnement du dispositif de lecture optique décroît et atteint une valeur inférieure au seuil de bon fonctionnement des circuits électroniques, l'opérateur 3 peut en être averti au préalable (signaux sonores et/ou lumineux, par exemple) et peut continuer ses opérations de remplissage du contenant en toute sécurité, à l'aide d'un dispositif de lecture optique de réserve. L'information d'indisponibilité du premier dispositif de lecture optique est transmise au système informatique central. Celui-ci, connaissant l'état instantané du contenu remplissant le contenant (quels articles ont été chargés et en quelle quantité), et notamment celui atteint lors du changement de dispositif de lecture optique, il peut donc transmettre au dispositif de lecture optique de secours une série d'instructions et de données d'initialisation qui permettent à l'opération de remplissage du contenant de se poursuivre sans risques d'erreurs (articles en trop ou en moins, par rapport à la commande à satisfaire).

Si une liaison en temps réel avec un système central n'existe pas, il est nécessaire, soit que l'opérateur 3 soit prévenu suffisamment à l'avance du risque d'arrêt du dispositif de lecture optique opérationnel, pour qu'il puisse en changer, une fois le colis en cours de confection terminé et avant d'en commencer un autre, soit qu'il reprogramme manuellement le nouveau dispositif de lecture optique, pour tenir compte des articles déjà placés dans le contenant.

Selon encore une autre variante, le changement d'accumulateur sera du type rapide et possible en cours d'opération sans altération de données.

Selon une autre variante de réalisation encore (non représentée), l'organe d'affichage du dispositif de lecture optique est rendu amovible.

Un tel organe d'affichage, habituellement du type à cristaux liquides, et les circuits de commandes associés consomment très peu d'énergie électrique. Il peut être alimenté par une cellule solaire captant la lumière ambiante et la convertissant en énergie électrique.

L'opérateur 3 peut donc transporter avec lui cet organe d'affichage pendant les trajets qu'il effectue dans les zones de préparation. Si l'on munit cet organe d'affichage de circuits de réception de signaux électromagnétiques, celui-ci reste en liaison permanente avec le boîtier du dispositif de lecture optique. Bien qu'il puisse en être autrement, la liaison est avantageusement unidirectionnelle, c'est-à-dire dans le sens boîtier-organe d'affichage. Les circuits de communication présents dans l'organe d'affichage peuvent donc être très simples, et donc ne comporter que des circuits de réception comme il a été supposé ci-dessus.

Le boîtier principal peut être laissé à l'état de veille, voire même éteint lors des déplacements de l'opérateur 3, ce qui augmente l'autonomie de fonctionnement. Si une liaison permanente est nécessaire, on ne laisse opérationnel qu'un minimum de circuits : les circuits de communication et les circuits de traitement local de l'information, par exemple. Les circuits de balayage optique ne sont pas alimentés.

Dans ce mode de réalisation, l'organe d'affichage peut être transporté en permanence par l'opérateur. On veille alors à ne placer dans le boîtier auxiliaire constitué par l'organe d'affichage que le minimum de circuits nécessaires à son bon fonctionnement, de manière à minimiser sa consommation électrique, à le miniaturiser au maximum et à en réduire son poids, ce pour des raisons d'ergonomie.

L'opérateur 3 peut transporter l'organe d'affichage à la main ou, de façon préférentielle, autour du poignet ou de l'avant-bras. Pour ce faire, on munit cet organe d'affichage d'un bracelet ou de moyens similaires. Une variante de réalisation particulièrement avantageuse consiste à prévoir cet organe d'affichage en double avec l'écrant 52, qui lui reste fixe sur le lecteur, ce dernier étant équipé de circuits électroniques assurant la duplication des informations apparaissant sur l'écran fixe vers l'écran amovible.

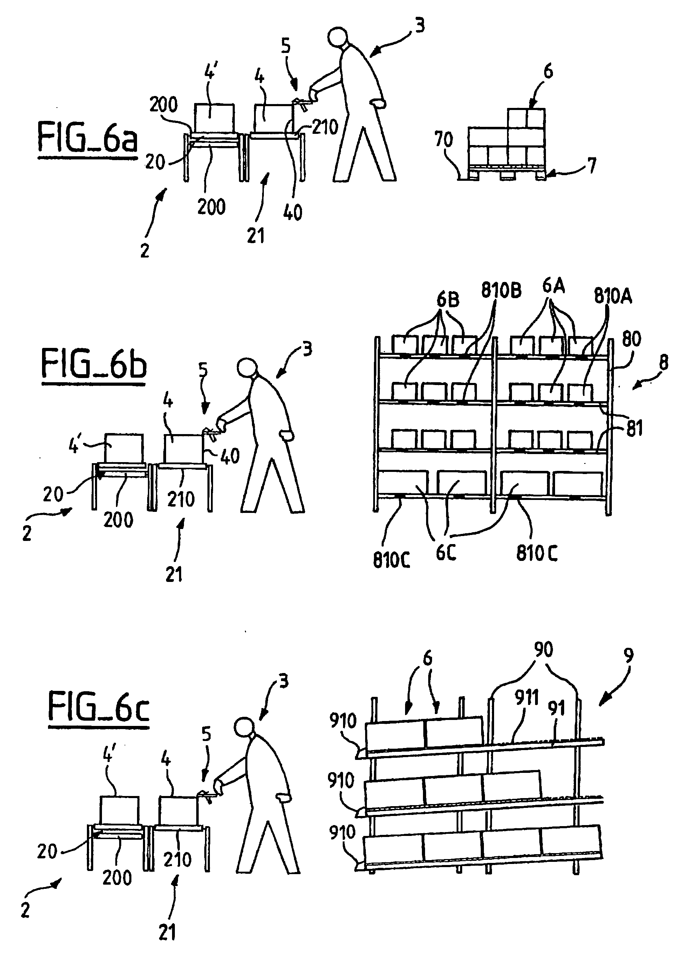

On va maintenant décrire de façon plus détaillée, par référence aux figures 6a à 6c, trois types de secteurs de stockage de marchandises parmi les plus courants : secteur ou gare à palettes, secteur ou gare à casiers de tirage statique, secteur ou gare à casiers de tirage dynamique dorsaux. Les éléments communs aux figures 6a à 6c portent les mêmes références et ils ne seront redécrits qu'en tant que de besoin. D'autre part, et comme on l'a déjà indiqué, l'installation peut également comporter des secteurs mixtes associant des équipements frontaux avec des équipements de stockage dorsaux, à tirage dynamique, à tirage statique, ou à palettes.

La figure 6a illustre un exemple de secteur ou gare du type à palettes 7. On a représenté les deux chemins du convoyeur 2, le chemin principal 20 défini par des rouleaux motorisés 200 (ou un tapis de transport équivalent), qui transporte un contenant 4' en cours de commande, et le chemin auxiliaire 21 qui est constitué (dans l'exemple décrit) de rouleaux libres 210. Un colis 4, en cours de remplissage, est posé sur ces rouleaux 210. On a également représenté le dispositif de lecture 5, dans la disposition où il est accroché provisoirement à la paroi 40 et où il fonctionne en mode de lecture à mains libres, et un opérateur 3 en train de charger les articles commandés disponibles dans le secteur.

Dans ce secteur, les articles 6 sont disposés sur des palettes 7, soit directement (par exemple s'il s'agit de produits de grandes dimensions), soit contenus dans des bacs, cartons, ou tout autre emballage. En front de chaque palette 7, on peut disposer une étiquette 70 référençant les produits qui y sont rangés et/ou indiquant leurs adresses (localisation), en clair ou par l'intermédiaire de codes à barres. Dans ce dernier cas, l'opérateur 3 effectue une lecture initiale en mode de lecture par pistolet et il peut afficher sur l'écran 52 (figures 3a à 4), en clair, les références et la localisation des produits présents dans son secteur. L'intérêt de ce type de secteur est de pouvoir amener les produits dans la zone de stockage directement sur des palettes, à l'aide d'engins motorisés, sans devoir les décharger. Les palettes vides sont retirées de la zone de stockage par la même voie.

Dans une variante non représentée, tout ou partie des articles présents dans le secteur peuvent être déposés directement à même le sol, notamment pour des articles de grandes dimensions.

La figure 6b illustre un exemple de secteur ou gare à casiers d'alimentation pour tirage statique 8. La définition de tels casiers implique classiquement un ensemble de montants verticaux 80 soutenant des étagères horizontales 81. Les divers articles y sont disposés directement ou dans des cartons ou autres emballages. On a supposé, dans l'exemple décrit, qu'il y avait trois références distinctes d'articles, 6A à 6C. Comme précédemment, on peut disposer en front d'étagère des étiquettes 810A à 810C, sur lesquelles on a inscrit, en clair ou sous forme codée, les références des articles qui y sont disponibles, ainsi éventuellement que des informations d'adresse. Dans ce type de secteur ou gare à casiers la présence d'un écran amovible remplaçant l'écran ou le doublant et reprenant ses informations sera très utile à l'opérateur pour lui rappeler les indications nécessaires à la réalisation des opérations qu'il aura à effectuer au cours de son déplacement.

La figure 6c illustre un exemple de secteur ou gare avec casiers dynamiques dorsaux 9. Comme précédemment, ces casiers 9 comprennent une infrastructure à montants verticaux 90. Ceux-ci par contre supportent des plans légèrement inclinés 91, qui sont munis de rouleaux libres ou organes similaires 911. Les articles sont posés sur ces rouleaux 911, directement ou dans des cartons ou emballages similaires. Sous l'effet de la pesanteur, les plans 91 étant inclinés vers l'opérateur 3, les articles 6 se déplacent vers l'avant des casiers 9 au fur et à mesure qu'ils en sont extraits pour être chargés dans un contenant 4 en cours de remplissage en satisfaction d'une commande.

Il est clair que ce type de structure est très intéressant, car elle n'oblige pas l'opérateur 3 à se déplacer le long des rayonnages, les produits à charger 6 étant alimentés à portée de main, sur un ou plusieurs niveaux selon les cas, chaque niveau en général attribué à une référence d'article distincte.

Comme précédemment, on dispose en front de plan incliné 91 des étiquettes 910, sur lesquelles on a inscrit, en clair ou sous forme codée, les références précitées, ainsi éventuellement que des informations d'adresse.

La figure 7 illustre schématiquement un exemple d'architecture complète d'un système informatique de gestion de l'ensemble des fonctions et tâches de préparation de commandes mettant en oeuvre des dispositifs de lecture optique selon l'invention.

Le système informatique comprend un ordinateur central sous la référence générale *CPU.* Le choix du type d'ordinateur dépend, notamment, du nombre de commandes traitées et du nombre d'opérations à effectuer dans un laps de temps donné (flux de cartons, etc.). Il peut être constitué d'un simple micro-ordinateur pour de petites installations, d'un serveur de réseau, d'un mini-ordinateur ou d'un ordinateur plus puissant, du type dit "main frame", selon la terminologie anglosaxonne. Les tâches en relation avec la préparation des commandes qui sont spécifiques à l'invention peuvent d'ailleurs ne constituer qu'une partie de l'activité du système informatique. Ce dernier peut notamment assurer des tâches générales, telles que la comptabilité et la gestion de l'entreprise, et les applications informatiques spécifiques et générales peuvent être interconnectées.

L'ordinateur central *CPU* est relié aux différents dispositifs de lecture de codes à barres, dont seulement quatre, 5a à 5d, ont été représentés sur la figure 7, par toute liaison appropriée, symbolisée par une liaison filaire référencée Bus, par exemple du type série.

On doit bien comprendre que d'autres types de liaisons sont tout-à-fait possibles. Il existe notamment des possibilités de liaisons par radio, par exemple des liaisons conformes au standard IEEE 802.11, utilisant des algorithmes à saut de fréquence dits FHSS (pour "Frequency Hopping Spread Spectrum"), ou à fréquence fixe dits DSSS (pour "Direct Sequence Spread Spectrum"). Selon un accord mondial (référencé ETS 300 328 pour l'Union Européenne), la gamme de fréquences réservée à cet usage s'étend de 2446,6 MHz à 2483,5 MHz. De telles liaisons sont compatibles avec des réseaux locaux tels que des réseaux locaux de type "Ethernet" (marque déposée). Des cartes spécifiques qui sont proposées dans le commerce constituent un point d'entrée pour le réseau.

Il existe également des possibilités de liaisons par voie optique (par faisceau infrarouge), des cartes spécifiques étant également disponibles dans le commerce, ou par boucle magnétique. L'ordinateur central *CPU* peut aussi être localisé dans un lieu éloigné, voire très éloigné de l'entrepôt de stockage des marchandises. On peut alors faire appel à un modem ou à un réseau de type dit intranet, relié lui-même éventuellement au réseau "Internet". Enfin, il est possible de faire appel à plusieurs de ces techniques. A titre d'exemple, pour un ordinateur central *CPU* éloigné, les dispositifs de lecture 5a à 5d peuvent être reliés à un micro-ordinateur local (non représenté), via une liaison filaire, radio ou optique, le micro-ordinateur local étant relié par modem à l'ordinateur central *CPU*.

Les organes d'aiguillage 210, présents sur le convoyeur 2 (figure 2), peuvent aussi être surveillés par l'ordinateur central *CPU*, directement ou via un automate local, ce qui lui permet de connaître, en temps réel, la position de tous les colis 4 en cours de préparation et l'état d'avancement des commandes en cours de traitement. Pour ce faire, des lecteurs de codes à barres fixes, dont quatre seulement on été représentés, 2100a à 2100d, sont associés aux organes d'aiguillage 210. Ces lecteurs sont donc également reliés à l'ordinateur central *CPU* par liaison filaire bus ou autre. Le décodage des informations portées par un contenant particulier 4 déclenche sélectivement l'organe d'aiguillage d'un secteur, si et seulement si des articles du secteur desservi par cet aiguillage particulier doivent être chargés dans le contenant.

Cette opération peut être sous la commande directe des lecteurs fixes de contenants 2100a à 2100d. Il est alors nécessaire qu'ils lisent et décodent des informations relatives aux références des articles objets de la commande. Si au moins une des références concerne un article présent dans le secteur, l'aiguillage est actionné.

L'aiguillage peut aussi être commandé de façon centralisée. Il suffit alors que l'ordinateur central *CPU* connaisse le numéro du contenant ou son identité. Cette information est comparée à une référence ou un numéro de commande. L'ordinateur central *CPU* ayant en mémoire la composition de la commande et la topologie du stock d'articles, secteurs par secteurs, il commande l'actionnement du ou des aiguillages 210 appropriés lors de la détection du passage du contenant 4 portant un identifiant correspondant au numéro de commande.

En résumé, l'ordinateur central *CPU* se voit typiquement confier les tâches suivantes parmi celles qui sont spécifiques à l'invention : gestion centralisée des commandes, gestion des tirages d'articles, colisage, édition des étiquettes à codes à barres d'identification des colis, gestion des emplacements de colis, surveillance de l'état des stocks et réapprovisionnement des différents lieux de stockage (secteurs et casiers), notamment en fonction de l'état prévisionnel des commandes et de l'enlèvement progressif des articles dans les rayonnages ou palettes. Il peut commander aussi les aiguillages, transmettre des données aux dispositifs de lecture selon l'invention, 5a à 5d, et recevoir des données de ces mêmes lecteurs et des lecteurs 2100a à 2100d.

Les dispositifs de lecture de codes à barres 5a à 5d traitent, a priori en local, la gestion de la préparation des commandes dans les différents secteurs. Typiquement, ils emmagasinent dans leur mémoire tout ou partie des bases de données suivantes : base de données des emplacements par secteur, base de données des références des articles, base de données des identifications de colis lancés en cours (contenants 4 sur le convoyeur 2). Ces données peuvent être préchargées ou être émises en temps réel par l'ordinateur central *CPU* et mémorisées dans les dispositifs de lecture de codes à barres 5a à 5d. Ceux-ci effectuent avantageusement le rapprochement entre les références d'articles et leurs emplacements dans les secteurs, l'affichage des articles, des emplacements et des quantités, par lignes, après lecture de l'identité des contenants, et l'effacement des lignes après chargement des articles dans les contenants. Ils émettent enfin des signaux d'avertissement (bips sonores caractéristiques par exemple), en cas par exemple d'article chargé correct ou non, de tentative d'un deuxième chargement d'une même série d'articles, etc.

Jusqu'à présent, on a considéré le cas d'un système à forte automatisation : système de préparation de commandes à dérivations multiples. L'invention est cependant tout-à-fait compatible avec des systèmes de préparation impliquant plus d'opérations manuelles. Le dispositif de lecture utilisé pour ce type d'installation est identique à celui qui vient d'être décrit, dans ses différentes variantes de réalisation ; seule la procédure suivie est différente. La lecture de l'identité du contenant (ou celle des contenants dans le cas d'une préparation de plusieurs commandes simultanément dans une même tournée) est effectuée par l'opérateur en début de tournée, ce qui provoque la mise en mémoire des références des articles à prélever et des quantités. Il passe ensuite de zone en zone, le(s) contenant(s) étant transporté(s) à la main, sur un engin mécanisé ou sur un convoyeur comme précédemment.

A chaque passage dans une nouvelle zone, une allée de tirage (ou "picking") par exemple, l'opérateur lit une identification de zone, en mode de lecture par pistolet. Cette lecture provoque l'affichage des emplacements et de la quantité d'articles à prélever, le dispositif ayant en mémoire les caractéristiques de la commande associée au colis en cours de constitution. En posant le lecteur sur son support, l'opérateur provoque ensuite la commutation du dispositif de lecture de codes à barres selon l'invention en mode à mains libres, comme dans le cas des systèmes à dérivations multiples. Quand un article est placé dans le contenant, une décrémentation d'une unité de la référence correspondante est effectuée, comme précédemment.

Dans le cas d'une préparation simultanée de plusieurs commandes, le mode d'affichage indiquera dans quel contenant l'opérateur doit placer l'article prélevé dans la gare.

A la lecture de ce qui précède, on constate aisément que l'invention atteint bien les buts qu'elle s'est fixés, alors même qu'il doit être clair qu'elle n'est pas limitée aux seuls exemples de réalisation explicitement décrits, notamment en relation avec les figures 3a à 7.

Elle présente de nombreux avantages. En particulier, dans les systèmes de préparation de commandes à dérivations multiples, le dispositif de lecture et décodage de marques optiques selon l'invention autorise la présence active de plusieurs opérateurs dans un même secteur, ce qui minimise les possibilités de files d'attente, voire de blocage total du système. Il est même possible, notamment si un contrôle en temps réel par un système informatique central est implanté, que plusieurs opérateurs d'un même secteur assurent le remplissage d'un même contenant, simultanément ou séquentiellement.

Quel que soit le système de préparation de commandes envisagé, fortement automatisé ou manuel, la fiabilité du tirage est augmentée, voire proche du zéro défaut, les opérateurs étant entièrement guidés et les opérations réellement effectuées étant contrôlées. Dans tous les cas, on peut éviter le cochage de liste. On obtient un gain de productivité par rapport à la gestion par listes à cocher ou par afficheurs qu'il est nécessaire d'acquitter. Ce gain de productivité est dû essentiellement au mode de lecture en mains libres pendant le chargement du colis à confectionner, et ceci d'une part grâce à la sécurité qu'apporte le traitement automatique des informations, d'autre part grâce à la facilité qu'éprouve l'opérateur à se déplacer avec rapidité, sans gêne et sans fatigue.

Par ailleurs, la description qui précède a l'intérêt de montrer clairement comment une installation de préparation de lots de commande met en oeuvre un dispositif de lecture et traitement d'informations suivant l'invention, dans le cas où les informations à traiter sont en partie recueillies à partir de marques codées se présentant optiquement sous la forme de ce que l'on appelle des codes à barres.

Il en ressort que ledit dispositif comporte un lecteur optique portatif à fonctionnement alternativement en lecture et décodage de codes à barres relevant d'au moins deux séries d'informations différentes, respectivement de contenant et de contenu, des moyens de traitement d'informations de ladite série d'informations de contenu en fonction d'informations de ladite série d'informations de contenant préalablement recueillies par lecture de codes à barres correspondants, des moyens de commutation pour faire passer ledit lecteur d'un premier mode de lecture dans lequel il fonctionne en lecture et traitement de codes à barres relevant d'informations de contenant à un second mode de lecture dans lequel il fonctionne en lecture et traitement de codes à barres relevant d'informations de contenu, et des moyens de commande automatique desdits moyens de commutation en fonction de la présence ou non dudit lecteur sur un support qui lui est associé.

Il en ressort également que dans les modes de réalisation préférés d'un tel dispositif appliqué à une installation de préparation de lots de commandes par prélèvement manuel d'articles dans des zones de stockage en fonction des commandes à satisfaire dans des contenants respectifs, lesdits moyens de commutation sont au moins doubles, si ce n'est triples (pour contenant, contenu, zone de stockage, par exemple). Ils ont été décrits notamment comme comportant un premier commutateur déclenchant un premier mode de lecture dans lequel ledit lecteur est portatif et opératif en lecture et décodage d'une première série de marques optiques, associées à des informations de contenant, un second commutateur déclenchant un second mode de lecture dans lequel ledit lecteur est opératif en lecture et décodage d'une seconde série de marques optiques, associées à des informations de contenu, et/ou un troisième commutateur déclenchant un troisième mode de lecture pour des informations de zones ou emplacements de stockage, le second commutateur étant de préférence mis en oeuvre automatiquement dès lors que le lecteur portatif est placé dans son état de fixation temporaire sur le support qui lui est réservé.

Il est clair que l'invention permet ainsi d'éviter tous les inconvénients des installations de préparation de lots de commandes précédemment connus, et que de plus, elle échappe aux conséquences néfastes qu'entraîneraient des solutions passant par le biais de lecteurs de codes à barres à transmission par radiofréquences qui ne permettraient pas le fonctionnement dit ci-dessus en mode à mains libres, ni de changer de mode de lecture sans frapper sur des touches de clavier. Si tant est qu'il existe une solution logicielle pour éviter de frapper dans ce cas sur des touches propres au clavier du lecteur, elle imposerait des caractères spéciaux sur les étiquettes du contenant ou ne garantiraient pas la fiabilité du changement de mode de lecture en cas de déficience de lecture de l'étiquette lors du premier balayage chargé de la lecture des codes relevant des informations liées au contenant.

Il est à souligner en outre que l'invention telle que décrite dans ses modes de réalisation préférés, permet d'éviter les gênes physiologiques du genre de celles qu'impliqueraient des lecteurs de codes à barres dont le fonctionnement serait tributaire d'une position qu'ils occuperaient sur le corps de l'opérateur, à supposer par exemple qu'ils comportent une partie formant lecteur en lecture forcée sur le doigt de l'opérateur et une partie formant clavier et écran à porter sur l'avant-bras, les deux parties étant reliées en transmission par radiofréquences.

Dans le cadre de l'invention, il devient possible de changer de mode de lecture conjointement à une commutation de nature de lecture, en passant d'un mode à un autre pour ce qui a été illustré par un fonctionnement alternativement en pistolet ou en mains libres, respectivement pour lire des codes barres relevant d'infomations de contenant et pour recueillir les informations de contenu par lecture des codes à barres correspondants. A chaque séquence de remplissage d'un contenant, le mode de fonctionnement en mains libres permet que l'opérateur ne souffre pas de gêne physiologique, ni de simple fatique, pendant ses déplacements entre les étapes de fonctionnement du lecteur en pistolet tenu à la main.

## Revendications

1. Installation de préparation de lots de commandes, chaque lot comprenant au moins un article (6a-6b) de référence déterminée, à placer dans un contenant (4) par prélèvement dans une zone de stockage (Z₂ₐ-Z_{2b}), comportant au moins un dispositif portatif de lecture optique (5) comportant un organe de lecture et de décodage de marques optiques (53),
**caractérisée en ce qu'**elle comporte, pour chaque dit dispositif de lecture optique :
des moyens de commutation (57a, 57b) déclenchant alternativement un premier mode de lecture dans lequel ledit dispositif est opératif en lecture d'une première série de marques optiques (41), associée à un contenant particulier (4) à remplir par un opérateur, et un second mode de lecture, dit à mains libres, dans lequel ledit dispositif (5), dans un état de fixation temporaire sur un support associé audit contenant (4), est opératif en lecture d'une seconde série de marques optiques (60A-60B), associée à chaque dit article, lors du passage d'articles (6A-6B) devant son organe de lecture et décodage de marques optiques (53) pour les introduire dans ledit contenant (4),
ainsi que des moyens de traitement d'informations de contenu recueillies dans ledit second mode de lecture en fonction d'informations de contenant recueillies dans le premier mode de lecture.

2. Installation selon la revendication 1, **caractérisée en ce qu'**elle comporte des moyens de commande automatique du passage dudit premier mode de lecture quand le dispositif est utilité en appareil portatif manoeuvrable à la main par l'opérateur audit second mode de lecture quand il est utilisé en mains libres posé sur ledit support, lesdits moyens commandant aussi automatiquement le passage d'un traitement de première nature des informations de contenant recueillies dans le premier mode de lecture à un traitement de seconde nature des informations de contenant recueillies dans le second mode de lecture en fonction desdites informations de contenant.

3. Installation suivant la revendication 1 ou 2, **caractérisée en ce que**, ledit support étant constitué par ledit contenant, elle comporte des moyens de fixation temporaire du dispositif de lecture optique (5) audit contenant (4) qui comprennent une pince (560-561) à ressort (562) permettant d'assujettir le dispositif portatif de lecture optique (5) sur l'extrémité supérieure d'une paroi (40) dudit contenant (4), cette paroi (40) étant alors emprisonnée dans ladite pince (560-561).

4. Installation suivant la revendication 1 ou 2, **caractérisée en ce que**, ledit support étant constitué par ledit contenant, elle comporte des moyens de fixation temporaire du dispositif de lecture optique (5) audit contenant (4) qui comprennent un crochet (56') permettant d'assujettir le dispositif (4) à l'extrémité supérieure d'une paroi (40) dudit contenant (4), ledit crochet (56') , étant alors accroché à cette extrémité de paroi (40).

5. Installation suivant la revendication 3 ou 4 **caractérisée en ce que** lesdits moyens (56, 56') de fixation temporaire coopèrent avec lesdits moyens de commutation de manière à déclencher automatiquement le passage dudit premier mode de lecture au second, lorsque ledit dispositif de lecture optique (5, 5') est assujetti audit support, et à déclencher automatiquement le passage inverse dudit second mode de lecture au premier, lorsque ledit dispositif de lecture optique (5, 5') est retiré dudit support.

6. Installation suivant l'une quelconque des revendications précédentes, **caractérisée en ce que** ledit dispositif de lecture optique (5) comprend un boîtier (50) formant corps principal et un organe de préhension (55) constitué d'une crosse pouvant être tenue à la main par un opérateur (53), **en ce que** lesdits moyens de commutation comprennent un premier commutateur (57a), logé en saillie dans ladite crosse (55), et un second commutateur (57b), disposé sur ledit corps principal (50), et **en ce que** lesdits premier (57a) et second (57b) commutateurs agissent sur des circuits électroniques disposés à l'intérieur dudit boîtier (50), de manière à déclencher respectivement ledit premier mode de lecture pour la lecture de ladite première série de marques optiques (41) et ledit second mode de lecture pour la lecture de ladite seconde série de marques optiques (60A-60B).

7. Installation selon la revendication 8, **caractérisée en ce que** ledit dispositif portatif de lecture optique (5) comprend en outre un organe de visualisation (52), commandé par lesdits circuits électroniques, pour l'affichage des informations obtenues par lecture et décodage de ladite première série de marques optiques (41) associés au contenant (4), dans ledit premier mode de lecture, et pour l'affichage des informations résultant, dans le second mode de lecture, desdits passages d'articles (6A-6B) devant ledit organe (53) de la lecture et décodage de ladite seconde série de marques optiques (60A-60B) et de leur traitement en fonction des informations de contenant.

8. Installation selon la revendication 7, **caractérisée en ce que** ledit organe de visualisation est amovible, de manière à pouvoir être transporté par ledit opérateur (3), ou doublé d'un écran amovible.

9. Installation suivant la revendication 7 ou 8, **caractérisée en ce que** l'extrémité inférieure de ladite crosse (55) dudit dispositif portatif de lecture optique (5) comporte un crochet (58) d'accrochage de ce dispositif (5) à une pièce de vêtement dudit opérateur (3).

10. Installation selon l'une quelconque des revendications précédentes, **caractérisée en ce qu'**elle comprend un système de traitement de données centralisée (*CPU*), et **en ce que** ledit dispositif portatif de lecture optique (5) comprend en outre des moyens (54) de couplage électriques, électromagnétiques ou optiques, de manière à établir des transmissions de données et/ou d'instructions entre lesdits circuits électroniques et ledit système de traitement de données centralisé (*CPU*).

11. Procédé de confection d'un lot dans une installation selon l'une quelconque des revendications 3 à 9, chaque lot comprenant au moins un article (6A-6B), de référence déterminée, à placer dans des contenants (4) de préparation de commandes par prélèvement dans une zone de stockage (Z₂ₐ-Z_{2b}) où lesdits articles (6A-6B) sont rangés, **caractérisé en ce qu'**il comprend au moins les étapes suivantes :
- apposition d'une première série de marques optiques (41) sur chacun desdits contenants (4) ;
- enclenchement dudit premier mode de lecture par actionnement d'un premier commutateur (57a) et lecture de ladite première série de marques optiques (41) à l'aide dudit dispositif portatif de lecture optique (5), opératif dans ledit premier mode de lecture ;
- affichage sur ledit organe de visualisation (52) d'informations issues de la lecture de ladite première série de marques optiques (41) et de leur décodage par lesdits circuits électroniques par un traitement de première nature ;
- lecture, par ledit opérateur (3), desdites informations affichées ;
- fixation temporaire du dispositif (5) audit support et enclenchement dudit second mode de lecture par actionnement d'un second commutateur (57b) ;
- recherche desdits articles (6A-6B) à placer dans chaque contenant (4) dans ladite zone de stockage (Z₂ₐ-Z_{2b}), à partir de la lecture, par ledit opérateur (3), desdites informations affichées par l'organe de visualisation (52) ;
- passage desdits articles (6A-6B) devant ledit organe (53) de lecture et de décodage de marques optiques, et lecture de marques optiques (60A-60B), constituant ladite seconde série de marques optiques et associées auxdits articles (6A-6B), et placement de ces articles (6A-6B) dans le contenant (4), de manière à constituer ledit lot ; ledit passage occasionnant un traitement de seconde nature des informations correspondantes en fonction des informations de contenant, avec contrôle et prise en compte de ladite référence d'article déterminée.

12. Procédé selon la revendication 10, **caractérisé en ce que** ladite première série de marques optiques (41) porte des informations d'identification desdits contenants (4), des informations identifiant les articles (6A-6B) à placer dans les contenants (4), en références et en quantité, ainsi que des informations d'adresses permettant de localiser les articles dans ladite zone de stockage (Z₂ₐ-Z_{2b}).

13. Procédé selon l'une quelconque des revendications 11 et 12, **caractérisé en ce que** lesdits contenants (4) étant transportés par un convoyeur motorisé (2) et ladite zone de stockage (Z₂ₐ-Z_{2b}) étant divisée en secteurs stockant des articles associés à des références déterminées, le convoyeur comportant un organe d'aiguillage (210) pour chacun desdits secteurs, il comprend une étape supplémentaire de lecture de ladite première série de marques optiques (41) par un lecteur optique fixe associé à chaque aiguillage, de manière à l'actionner sélectivement quand au moins un article (6A-6B) portant une référence déterminée appartenant audit lot à confectionner est stocké dans le secteur desservi par celui-ci et à dévier ledit contenant vers ce secteur, pour qu'un opérateur (3) affecté à ce secteur puisse y placer ledit article (6A-6B).

14. Dispositif portatif de lecture et de traitement d'informations disponibles sous forme de marques optiques, **caractérisé en ce qu'**il comporte des moyens de lecture et de décodage (53) desdites marques optiques fonctionnant alternativement en lecture de marques optiques relevant d'au moins deux séries d'informations différentes, respectivement dites de contenant (41) et de contenu (60A-60B), des moyens de traitement d'informations associés à ladite seconde série de marques optiques (60A-60B) en fonction d'informations associées à ladite première série de marques optiques (41), des moyens de commutation (57b) pour faire passer ledit dispositif portatif de lecture (5) d'un premier mode consistant en la lecture et le décodage des marques optiques dites de contenant (41) et au traitement des informations qui leur sont associées, à un second mode de lecture consistant en la lecture et le décodage de marques optiques dites de contenu (60A-60B) et au traitement des informations qui leur sont associées, et des moyens (56) de commande automatique desdits moyens de commutation (57b) actionnés par la présence ou non dudit dispositif portatif de lecture (5) sur un support (4) associé audit contenant.

## Claims

1. Installation for preparing order batches, each batch including at least one item (6A-6B) of a determined reference, to be placed into a container (4) by being picked in a storage area (Z₂ₐ-Z_{2b}), comprising at least one portable optical reading device (5) comprising a member (53) for reading and decoding optical indicia,
**characterized in that** it comprises for each optical reading device :
switching means (57a, 57b) for alternately triggering a first reading mode wherein said device is operative for reading a first optical indicia series (41) associated with a particular container (4) to be filled by an operator and a second, so called hand-free, reading mode wherein said device (5), in a temporary fixation state on a support associated with said container (4), is operative for reading a second optical indicia series (60A, 60B), associated with each said item, during the shifting of the items (6A, 6B) in front of its member for reading and decoding optical indicia (53), to introduce them into said container (4),
as well as means for processing content informations collected in said second reading mode according to container informations collected in said first reading mode.

2. Installation according to claim 1, **characterized in that** it includes means for automatically controlling the shifting of said first reading mode, when the device is used as a portable apparatus to be hand manipulated by the operator, into said second reading mode when it is used hand free affixed on said support, said means automatically controlling the shifting of a first nature process of container informations collected in the first reading mode into a second nature process of the container informations collected in the second reading mode according to container informations.

3. Installation according to claim 1 or 2, **characterized in that**, said support consisting of said container, it comprises temporary fixation means of said optical reading device (5) on said container (4) which comprise a spring (562) clamp (560, 561) allowing securing the portable optical reading device (5) on the top end of a wall (40) of said container (4), said wall (40) being trapped in said clamp (560, 561).

4. Installation according to claim 1 or 2, **characterized in that**, said support consisting of said container, it comprises temporary fixation means of said optical reading device (5) on said container (4) which comprise a hook (56') allowing securing the device (5) on the top end of a wall (40) of said container (4), said hook (56') hanging from this wall end (40).

5. Installation according to claim 3 or 4, **characterized in that** said temporary fixation means (56, 56') co-operate with said switching means, so as to automatically trigger the switching from said first to said second reading mode, when said optical reading device (5, 5') is secured on said support, and to automatically trigger the inverse switching from said second to said first reading mode when said optical reading device (5, 5') is removed from said support.

6. Installation according to any of preceding claims, **characterized in that** said optical reading device (5) comprises a housing (50) constituting a main body, and a gripping member (55) consisting of a crosshead able of being hand held by an operator (3), **in that** said switching means comprise a first switch (57a), protrudlingly housed in said crosshead (55), and a second switch (57b), arranged on said main body (50), and **in that** said first (57a) and second (57b) switches act on electronic circuitry arranged inside said housing (50), so as to respectively trigger said first reading mode for reading the first optical indicia series (41) and said second reading mode for reading said second optical indicia series (60A, 60B).

7. Installation according to claim 6, **characterized in that** said portable optical reading device (5) further comprises a viewing member (52), controlled by said electronic circuitry, for displaying informations obtained from reading and decoding said first optical indicia series (41) associated with the container (4), in said first reading mode, and for displaying informations resulting, in the second reading mode, from said items (6A, 6B) passing in front of said reading and decoding member (53) of said second optical indicia series (60A, 60B) and from their processing according to container informations.

8. Installation according to claim 7, **characterized in that** said viewing member is removable to allow its being carried by said operator (3), or a removable screen is carried on it.

9. Device according to claim 7 or 8, **characterized in that** the lower end of said crosshead (55) of said portable optical reading device (5) includes a hook (58) for hanging this device (5) to an item of clothing of said operator (3).

10. Installation according to any preceding claims, **characterized in that** it comprises a centralized data processing system (CPU), and **in that** said portable optical reading device (5) further comprises means (54) for electrical, electromagnetic or optical coupling, so as to establish data and/or instruction transmissions between said electronic circuitry and said centralized data processing system (CPU).

11. Method for putting together a batch in the installation according to any claims 3 to 9, each batch comprising at least an item (6A-6B), of a determined reference, to be placed into order preparation containers (4) by being picked in a storage area (Z₂ₐ-Z_{2b}) where said items (6A-6B) are disposed, **characterized in that** it includes at least the following steps :
affixing a first optical indicia series (41) on each of said container (4) ;
initiating said first reading mode by actuating a first switch (57a), and reading said first optical indicia series (41) with the help of said portable optical reading device (5), operating in said first reading mode ;
displaying, on said viewing member (52), informations obtained from reading said first optical indicia series (41) and from decoding them by said electronic circuitry by a first nature process ;
said operator (3) reading said displayed informations ;
temporarily affixing the device (5) on said support and initiating said second reading mode by actuating a second switch (57b) ;
searching, in said storage area (Z₂ₐ-Z_{2b}), for said items (6A-6B) to be placed into each container (4), by having the operator (3) to read said informations displayed by said viewing member (52) ;
having said items (6A-6B) passing in front of said optical indicia reading and decoding member (53), and reading optical indicia (60A, 60B), constituting said second optical indicia series and associated with said items (6A-6B), and placing such items (6A-6B) into the container (4) so as to constitute said batch ; said passing causing a second nature process of corresponding informations according to container informations, with monitoring and taking into account of said reference of the determinated item.

12. Method according to claim 10, **characterized in that** said first optical indicia series (41) carries both informations identifying said containers (4), and reference and quantity informations identifying items (6A-6B) to be placed into the containers (4), as well as address informations allowing locating the items in said storage area (Z₂ₐ-Z_{2b}).

13. Method according to any claims 11 and 12, **characterized in that** said containers (4) being carried by a motorized conveyor (2) and said storage area (Z₂ₐ-Z_{2b}) being divided into sectors where items associated with determined references are stored, the conveyor comprising a shifting member (210) for each of said sectors, it includes an additional step of having said first optical indicia series (41) to be read by a fixed optical device associated with each conveyor shifting member, so as to selectively actuate it when at least one item (6A-6B) bearing a determined reference belonging to said batch to be put together is stored in the sector served by the latter and to deviate said container towards this sector, so that one operator (3) assigned to this sector can place said item (6A-6B) therein.

14. Portable device for reading and processing information available as optical indicia, **characterized in that** it comprises means (53) for reading and decoding said optical indicia, alternately operating by reading optical indicia pertinent to at least two different information series, respectively designated as container information (41) and content information (60A, 60B), means for processing information associated with said second optical indicia series (60A, 60B) according to information associated with said first optical indicia series (41), switching means (57b) for switching said portable reading device (5) from a first mode, consisting of reading and decoding so called container optical indicia (41) and processing information associated therewith, into a second reading mode, consisting of reading and decoding so-called content optical indicia (60A, 608) and processing information associated therewith, and automatic control means (56) of said switching means (57b), activated by said reading portable device (5) being or not present on a support (4) associated with said container.

## Patentansprüche

1. Vorrichtung zur Vorbereitung von Auftragsposten, wobei jeder Posten mindestens einen Artikel (6a - 6b) einer bestimmten Referenz enthält, der in einen Entnahme-Behälter (4) in einem Lagerbereich (Z₂ₐ-Z_{2b}) zu platzieren ist, welche Vorrichtung mindestens eine tragbare optische Ablesungsvorrichtung (5) umfasst, welche ein Ablese- und Decodierungselement (53) optischer Markierungen enthält, die **dadurch gekennzeichnet** ist, das sie für jedes genannte optische Lesegerät Folgendes umfasst:
- Umschaltmittel (57a, 57b), die abwechselnd einen ersten Ablesemodus, in welchem die genannte Vorrichtung im Betriebszustand die Ablesung einer ersten Reihe von optischen Markierungen (41) vornimmt, welche mit einem von einem Bediener zu befüllenden besonderen Entnahmebehälter verbunden sind, sowie einen zweiten Ablesemodus, den sogenannten Freihandmodus, auslösen, in welchem die genannte Vorrichtung (5) in einem Zustand der vorübergehenden Befestigung auf einer mit genanntem Behälter (4) verbundenen Abstützung im Betriebszustand die Ablesung einer zweiten Reihe, mit jedem der genannten Artikel verbundener optischer Markierungen (60A - 60B) vornimmt, wobei die Artikel (6A-6B) vor ihrem Ablese- und Dekodierelement (53) vorbeilaufen, um in den genannten Behälter (4) eingeführt zu werden,
- sowie Mittel zur Verarbeitung von Inhaltsinformationen, die im genannten zweiten Ablesemodus in Abhängigkeit von den im ersten Ablesemodus erhaltenen Behälterinformationen erfasst werden.

2. Vorrichtung nach Anspruch 1, **dadurch gekennzeichnet, dass** sie Mittel enthält zur automatischen Steuerung des Übergangs von dem genannten ersten Ablesemodus, bei dem die Vorrichtung vom Bediener als handbedienbares Tragegerät verwendet wird, in den genannten zweiten Ablesemodus, wenn das Gerät auf der genannten Stützvorrichtung abgesetzt freihändig verwendet wird, und dadurch, dass die genannten Mittel außerdem automatisch den Übergang von einer Verarbeitung einer ersten Art der im ersten Ablesemodus erfassten Behälterinformationen zu einer Verarbeitung einer zweiten Art der im zweiten Ablesemodus entsprechend den genannten Behälterinformationen erhaltenen Inhaltsinformation steuern.

3. Vorrichtung nach Anspruch 1 oder 2, **dadurch gekennzeichnet, dass** sie, mit der zu dem genannten Behälter gehörenden Abstützvorrichtung, Mittel zur zeitweiligen Befestigung des optischen Lesegerätes (5) auf dem Behälter (4) enthält, die eine Zwinge (560 - 561) mit Feder (562) umfassen, die es ermöglicht, die Tragvorrichtung zur optischen Ablesung (5) auf dem oberen Ende einer Wand (40) des genannten Behälters (4) festzumachen, wobei diese Wand (40) in der genannten Zwinge (560 - 561) eingefasst ist.

4. Vorrichtung nach Anspruch 1 oder 2, **dadurch gekennzeichnet, dass** sie mit der mit aus dem genannten Behälter bestehenden Abstützvorrichtung Mittel zur zeitweiligen Befestigung des optischen Lesegerätes (5) auf dem Behälter (4) enthält, die einen Haken (56') umfassen, welcher es ermöglicht, die Vorrichtung (4) auf dem oberen Ende einer Wand (40) des genannten Behälters (4) einzukeilen, wobei der genannte Haken (56') in dieses Endstück der Wand (40) eingehängt wird.

5. Vorrichtung nach Anspruch 3 oder 4, **dadurch gekennzeichnet, dass** die genannten Mittel (56, 56') zur zeitweiligen Befestigung so mit den genannten Umschaltmitteln zusammenwirken, dass sie automatisch den Übergang vom genannten ersten Ablesemodus zum zweiten auslösen, wenn die genannte optische Lesevorrichtung (5, 5') auf der genannten Abstützvorrichtung verkeilt ist, und dass sie automatisch auch den umgekehrten Übergang vom genannten zweiten Ablesemodus zum ersten auslösen, wenn das genannte optische Lesegerät (5, 5') von der genannten Abstützvorrichtung abgezogen wird.

6. Vorrichtung entsprechend einem der vorgenannten Ansprüche, **dadurch gekennzeichnet, dass** das genannte optische Lesegerät (5) ein Gehäuse (50) umfasst, welches einen Hauptkörper und ein Greiforgan (55) bildet, das aus einer von einem Bediener in der Hand haltbaren Traverse besteht (53); dass die genannten Umschaltmittel einem in die genannte Traverse (55) hineinragenden ersten Umschalter (57a) sowie einen auf dem genannten Hauptkörper (50) angeordneten zweiten Umschalter (57b) umfassen; dass die genannten ersten (57a) und zweiten (57b) Umschalter auf im Innern des genannten Gehäuses (50) angeordnete elektronische Schaltkreise so wirken, dass sie jeweils den genannten ersten Ablesemodus für das Ablesen der genannten ersten Reihe optischer Markierungen (41) und den genannten zweiten Ablesemodus für das Ablesen der genannten zweiten Reihe optischer Markierungen (60A - 60B) auslösen.

7. Vorrichtung nach einem der vorherigen Ansprüche, **dadurch gekennzeichnet, dass** das genannte tragbare optische Lesegerät (5) außerdem ein Visualisierungsorgan (52) enthält, das von den genannten elektronischen Schaltkreisen gesteuert wird und der Anzeige der durch das Ablesen erhaltenen Informationen sowie der Decodierung der genannten ersten Reihe optischer Markierungen (41) dient, die im genannten ersten Ablesemodus mit dem Behälter (4) verbunden sind, und das außerdem der Anzeige der sich im zweiten Ablesemodus ergebenden Informationen dient, dass die genannten Artikel (6A - 6B) vor dem genannten Organ (53) der Ablesung und Decodierung entsprechend der genannten zweiten Reihe optischer Markierungen (60A - 60B) und ihrer Verarbeitung, den Behälterinformationen entsprechend, vorbeiziehen.

8. Vorrichtung nach Anspruch 7, **dadurch gekennzeichnet, dass** das genannte Visualisierungsorgan derart beweglich ist, dass es vom genannten Bediener (3) befördert oder von einem beweglichen Bildschirm gedoppelt werden kann.

9. Vorrichtung nach Anspruch 7 oder 8, **dadurch gekennzeichnet, dass** das untere Ende der genannten Traverse (55) des genannten tragbaren optischen Lesegerätes (5) einen Haken (58) zur Aufhängung dieses Gerätes (5) an einem Kleidungsstück des genannten Bedieners (3) hat.

10. Vorrichtung nach irgendeinem der vorgenannten Ansprüche, **dadurch gekennzeichnet, dass** sie über eine zentrale Datenverarbeitungseinheit (CPU) verfügt und dass das genannte tragbare optische Lesegerät (5) außerdem Mittel (54) der elektrischen, elektromagnetischen oder optischen Kopplung umfasst, so dass es Daten- und/oder Befehls-Übertragungen zwischen den genannten elektronischen Kreisen und der genannten zentralen Datenverarbeitungseinheit (CPU) herstellen kann.

11. Verfahren der Konfektionierung eines Postens in einer Vorrichtung nach irgendeinem der Ansprüche 3 bis 9, wobei jeder Posten mindestens einen Artikel (6A - 6B) einer festgelegten Referenz umfasst, der im Behälter (4) zur Vorbereitung von Bestellungen durch Entnahme in einem Lagerbereich (Z₂ₐ - Z_{2b}) zu platzieren ist, wo die genannten Artikel gereiht sind, **dadurch gekennzeichnet, dass** es mindestens die folgenden Schritte umfasst:
- Anbringung einer ersten Reihe optischer Markierungen (41) zu jedem der genannten Behälter (4);
- Auslösen des ersten Ablesemodus durch Betätigung eines ersten Umschalters (57a) und Ablesen der genannten ersten Reihe optischer Markierungen (41) mit Hilfe des im genannten ersten Ablesemodus im Betriebszustand befindlichen tragbaren optischen Lesegerätes (5);
- Anzeige auf dem genannten Visualisierungsorgan (52) von Informationen aus der Ablesung der genannten ersten Reihe optischer Markierungen (41) sowie ihrer Decodierung durch die genannten elektronischen Kreise durch eine Verarbeitung der ersten Art;
- Ablesung der genannten angezeigten Informationen durch den genannten Bediener (3);
- Zeitweilige Befestigung der Vorrichtung (5) an die genannte Stützvorrichtung und Auslösung des genannten zweiten Ablesemodus durch Betätigung eines zweiten Umschalters (57b);
- Suche der in dem genannten Lagerbereich (Z₂ₐ - Z_{2b}) in jeden Behälter (4) zu platzierenden Artikel (6A - 6B) ausgehend von der Ablesung der vom Visualisierungsorgan (52) angezeigten Information durch den genannten Bediener (3);
- Vorbeilaufen der genannten Artikel (6A - 6B) vor dem genannten Organ (53) zur Ablesung und Decodierung optischer Markierungen, sowie zur Ablesung optischer Markierungen (60A - 60B), die die genannte zweite Reihe optischer und mit den genannten Artikeln (6A - 6B) verbundener Markierungen bilden, sowie Platzierung dieser Artikel (6A - 6B) in den Behälter (4), so dass sich daraus der genannte Posten zusammensetzt, wobei das genannte Vorbeilaufen der Artikel eine Verarbeitung einer zweiten Art der entsprechenden Information gemäß den Behälterinformationen auslöst, mit einer Kontrolle und Erfassung der genannten festgelegten Artikel-Referenzangabe.

12. Verfahren nach Anspruch 10, **dadurch gekennzeichnet, dass** die genannte erste Reihe optischer Markierungen (41) Identifikationsinformationen der genannten Behälter (4) sowie Informationen zur Kennzeichnung der in die Behälter (4) zu platzierenden Artikel (6A - 6B) mit Referenz- und Mengenangaben trägt, wie auch Adressenangaben, die es ermöglichen, die Artikel in dem genannten Lagerbereich (Z₂ₐ - Z_{2b}) ausfindig zu machen.

13. Verfahren nach einem der Ansprüche 11 und 12, **dadurch gekennzeichnet, dass** bei einem Transport der genannten Behälter (4) durch einen motorisch angetriebenen Förderer (2) und bei einer Aufteilung des genannten Lagerbereiches (Z₂ₐ - Z_{2b}) in Sektoren, welche die mit festgelegten Referenzen verbundenen Artikel lagern, sowie bei einer Ausstattung des Förderers mit einem Verteilerorgan (210) für jeden der genannten Sektoren, das Verfahren eine zweite Ablesephase der genannten ersten Reihe optischer Markierungen (41) durch ein feststehendes optisches Lesegerät umfasst, das mit jedem Verteiler derart verbunden ist, dass er selektiv betätigt wird, wenn mindestens ein Artikel (6A - 6B), der eine dem genannten zu konfektionierenden Posten zugehörige Referenzangabe trägt, in dem von diesen bedienten Sektor gelagert wird; und dass er den genannten Behälter in diesen Sektor umlenkt, damit ein diesem Sektor zugeteilter Bediener (3) den genannten Artikel dort platzieren kann (6A - 6B).

14. Tragbare Lese- und Datenverarbeitungsvorrichtung für in Form von optischen Markierungen zur Verfügung stehenden Informationen, **dadurch gekennzeichnet, dass** sie Ablesungs- und Decodierungsmittel (53) der genannten optischen Markierungen umfasst, welche Mittel (53) wechselweise in Betrieb sind, um die aus mindestens zwei verschiedenen Informationsreihen - jeweils Behälter- (41) und Inhalts- (60A - 60B) - Informationen genannt - stammenden optischen Markierungen abzulesen; dass sie Informationsverarbeitungsmittel umfasst, die mit der genannten zweiten Reihe optischer Markierungen (60A - 60B) entsprechend den mit der genannten ersten Reihe optischer Markierungen (41) verknüpften Informationen verbunden sind, dass sie außerdem Umschaltmittel (57b) umfasst, um das genannte tragbare Lesegerät (5) von einem ersten Modus, der aus der Ablesung und der Decodierung der sogenannten optischen Behältermarkierungen (41) sowie der Verarbeitung der mit ihnen verbundenen Informationen besteht, in einen zweiten Ablesemodus umzuschalten, der aus der Ablesung und Decodierung der sogenannten optischen Inhaltsmarkierungen (60A - 60B) sowie der mit ihnen verbundenen Informationen besteht, und dass sie schließlich automatische Steuerungsmittel (56) der genannten Umschaltmittel (57b) umfasst, die durch die Anwesenheit bzw. Nicht-Anwesenheit des genannten tragbaren Lesegerätes (5) auf einer mit dem genannten Behälter verbundenen Abstützvorrichtung (4) betätigt werden.
